# EUROPEAN PATENT APPLICATION

(11) **EP 4 362 282 A1**
(43) Date of publication of application: **01.05.2024**
(21) Application number: 23187778.8
(22) Date of filing: 26.07.2023
(51) Int. Cl.: H02K 1/12, H02K 29/03, H02K 41/03

(54) **PRIMARY COMPONENT FOR ELECTRIC MACHINES AND ELECTRIC MOTOR COMPRISING SUCH COMPONENT**

(30) Priority: 26.10.2022 IT 202200022068
(71) Applicant: Raw Power S.r.I., 42124 Reggio Emilia (IT)
(72) Inventor: TORREGGIANI, Ambra, 42121 Reggio Nell'Emilia (IT); BIANCHINI, Claudio, 42121 Reggio Nell'Emilia (IT); DAVOLI, Matteo, 42121 Reggio Nell'Emilia (IT)
(74) Representative: Dondi, Silvia

(57) **Abstract**

Primary component (1) for electric machines, in particular rotor or stator, comprising:
a honeycomb structure (2) comprising a plurality of honeycombs or niches (3);
a plurality of conducting elements (4), each of which is housed in one of the honeycombs (3) of the honeycomb structure (2).

## Description

The present invention relates to a primary component for electric machines and an electric motor comprising such primary component.

In particular, the present invention is applicable to both linear and rotary motors.

The invention finds application in several sectors, such as automotive, industrial automation, ventilation and pumping, lifting machines, earthmoving, heavy agriculture, gardening, naval sector machines. Beyond the numerous variants on the market, electric motors are essentially divided into two categories: rotary and linear ones.

A rotary motor is constituted by a fixed outer part (the stator) and by an inner part rotatable around its axis (the rotor). The rotor is fitted onto the stator by means of bearings.

A linear motor instead is constituted by a fixed part (the stator, also called "guide" or "track") and by a movable part (called "slide" or "slider") that is slidable along the fixed part.

In accordance with the established terminology, the two parts of an electric motor are also identified with the following terms:
- primary, where the windings are located;
- secondary.

The primary can be fixed or movable, and the same applies for the secondary.

The electric windings are housed in slots obtained in the primary.

This distribution of the windings gives rise in the air gap to a magnetomotive force with a stepped waveform, which generates air gap harmonics, degrading the performances of the motor.

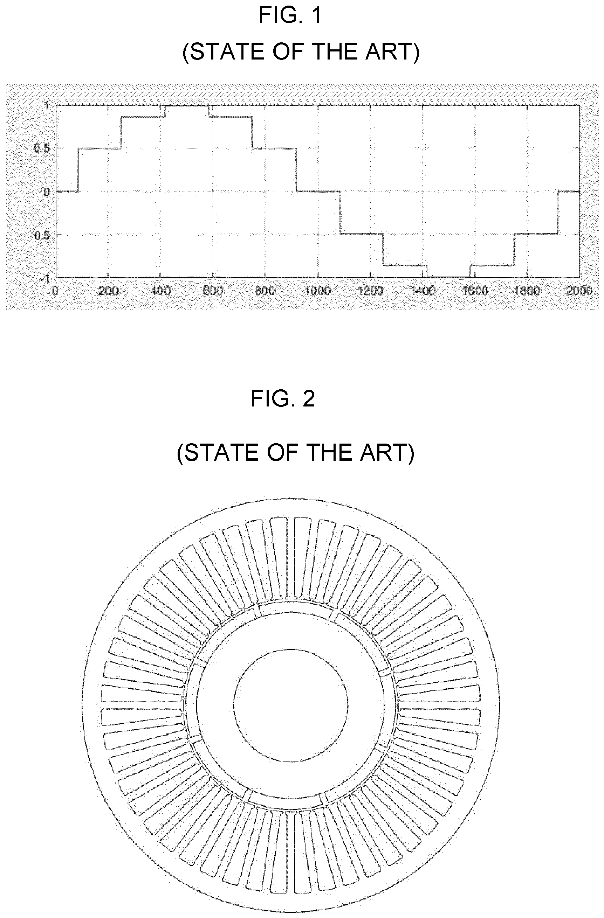

An example of such a waveform is illustrated in figure 1.

This structure with teeth and slots provides for the use of sheared metal sheets for the realization of stator and rotor, which binds designers to the use of solutions with planar symmetry and generates heat concentrations in the middle of the slot.

In fact, the windings housed in the slots are heated by the Joule effect and the heat generated by them flows outwards through the stator metal sheet. The winding parts furthest from the teeth are more subject to localised overheating, which limits the maximum current density that can be developed by the motor and, therefore, limits the electrical load.

An example of a rotary electric motor, in which the stator has the well-known structure with teeth and slots, is illustrated in figure 2.

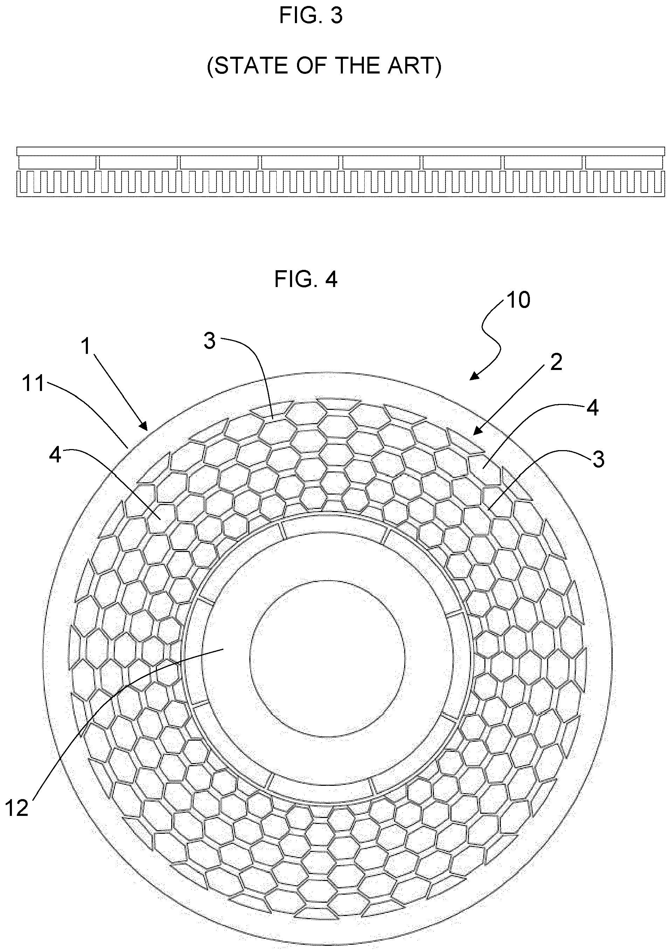

Figure 3 instead illustrates a linear electric motor according to the state of the art.

In this context, the technical task that is the basis of the present invention is to propose a primary component for electric machines and an electric motor comprising such primary component, which overcome the drawbacks of the cited prior art.

In particular, the aim of the present invention is to make available a primary component for electric machines that allows to improve the harmonic content of the air gap.

Another aim of the present invention is to propose a primary component for electric machines that allows to improve cooling, increase the maximum current density and increase the electric load.

Another aim of the present invention is to propose an electric motor having improved performances relative to the known solutions.

The stated technical task and the specified objects are substantially achieved by a primary component for electric machinery, comprising:
- a honeycomb structure comprising a plurality of honeycombs or niches;
- a plurality of conducting elements, each of which is housed in one of the honeycombs of the honeycomb structure.

In particular, each of the conducting elements is counter-shaped relative to the corresponding honeycomb into which it is inserted.

In accordance with one aspect of the invention, each of the honeycombs is a through cavity of prismatic shape and each of the conducting elements is a prismatic body that is counter-shaped to the prismatic shape of the corresponding honeycomb into which it is inserted.

In accordance with an embodiment of the invention, each of the honeycombs has a hexagonal cross-section and each of the conducting elements has a hexagonal cross-section that is counter-shaped relative to that of the corresponding honeycomb into which it is inserted.

In accordance with another embodiment of the invention, each of the honeycombs has a rectangular cross-section and each of the conducting elements has a rectangular cross-section that is counter-shaped relative to that of the corresponding honeycomb into which it is inserted.

In one embodiment, the honeycomb structure is made of ferromagnetic material.

In particular, the thickness of the honeycomb structure is sized so as to saturate the ferromagnetic material.

Alternatively, the honeycomb structure has interruptions at sides of the honeycombs.

In accordance with one aspect of the invention, the honeycomb structure is a single solid body, i.e. devoid of junctions.

The specified technical task and the specified objects are substantially achieved by an electric motor comprising a primary component in accordance with the present invention.

In one embodiment, the electric motor is of the rotary type and comprises a stator which is constituted by the primary component and a rotor rotatably inserted into the stator.

In another embodiment, the electric motor is of the rotary type and comprises a stator and a rotor rotatably inserted into the stator and constituted by the primary component.

In another embodiment, the electric motor is of a linear type and comprises a stator constituted by the primary component and a slider that is slidable relative to the stator.

In another embodiment, the electric motor is of a linear type and comprises a stator and a slider that is slidable relative to the stator and constituted by the primary component.

Further features and advantages of the present invention will become more apparent from the indicative, and therefore non-limiting, description of a preferred but non-exclusive embodiment of a primary component for electric machines and an electric motor comprising said primary component, as illustrated in the accompanying drawings in which:
- figure 1 illustrates the air gap waveform of a magnetomotive force with stepped course, according to the state of the art;
- figure 2 illustrates a cross-sectional view of a rotary electric motor, according to the state of the art;
- figure 3 illustrates a cross-sectional view of a linear electric motor, according to the state of the art;
- figure 4 illustrates a cross-sectional view of an electric motor, in one embodiment, according to the present invention;
- figure 5 illustrates a cross-sectional view of an electric motor, in another embodiment, according to the present invention;
- figure 6 illustrates a variant of the electric motor of figure 5;
- figures 7 and 8 illustrate the course of the flow lines within the honeycomb structure, in two different embodiments.

With reference to the figures, the numeral 1 indicates a primary component for electric machines, such as for example synchronous, asynchronous machines, alternating current or direct current motors.

The primary component 1 comprises a honeycomb structure 2, which in turn comprises a plurality of honeycombs or niches 3.

In particular, each honeycomb 3 is a through cavity.

In accordance with one aspect of the invention, the honeycomb structure 2 is a single solid body, i.e. devoid of junctions.

Preferably, the honeycomb structure 2 is obtained by additive manufacturing.

Alternatively, the honeycomb structure 2 is obtained by drawing or shearing. In one embodiment of the invention, the honeycomb structure 2 is made of ferromagnetic material. For example, the honeycomb structure 2 is made of iron-silicon metal sheets. The percentage of silicon can be varied. Some materials used are identified with the following abbreviations: M400, M250, M230.

In one embodiment, the honeycomb structure 2 is made of moulded ferrosilicon powder. The percentage of silicon can vary. In another embodiment of the invention, the honeycomb structure 2 is made of non-ferromagnetic material. For example, the honeycomb structure 2 is made of aluminium or aluminium alloys.

The primary component 1 further comprises a plurality of conducting elements 4, each of which is housed in one of the honeycombs 3 of the honeycomb structure 2.

Preferably, the conducting elements 4 are obtained by additive manufacturing. Alternatively, the conducting elements 4 are obtained by drawing or shearing.

For example, the conducting elements 4 are made of copper or aluminium. In accordance with one aspect of the invention, the number of conducting elements 4 is equal to the number of honeycombs 3 in that each honeycomb 3 houses a conducting element 4.

In particular, the honeycombs 3 are equal to each other in shape and sizes. The conducting elements 4 are also equal to each other in shape and sizes. In accordance with one aspect of the invention, each conducting element 4 is counter-shaped relative to the corresponding honeycomb 3 into which it is inserted.

In particular, each honeycomb 3 is a through cavity of prismatic shape and each conducting element 4 is a prismatic body that is counter-shaped to the prismatic shape of the corresponding honeycomb 3 into which it is inserted. Each honeycomb 3 has a polygonal cross-section and each conducting element 4 has a polygonal cross-section that is counter-shaped relative to the polygonal cross-section of the corresponding honeycomb 3.

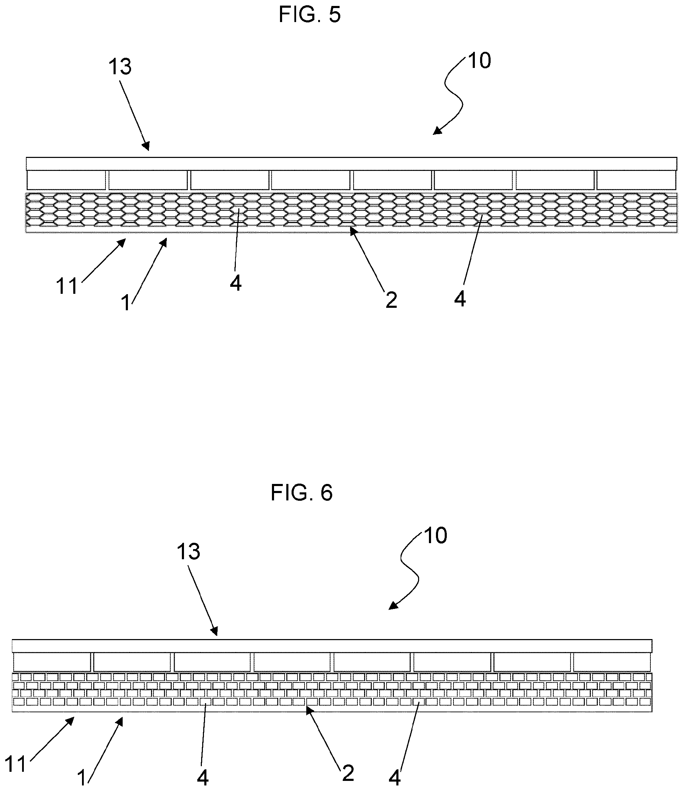

In accordance with an embodiment, illustrated in figures 4 and 5, each honeycomb 3 has a hexagonal cross-section and each conducting element 4 has a hexagonal cross-section that is counter-shaped to that of the corresponding honeycomb 3 into which it is inserted.

For example, each honeycomb 3 has a cross-section with elongated hexagon with a pair of parallel sides that are longer than the other sides. Such longer parallel sides of each honeycomb 3 are indicated with 3a. Correspondingly, each conducting element 4 has a cross-section with elongated hexagon with a pair of parallel sides longer than the other sides. Such longer parallel sides of each conductor 4 are indicated with 4a.

In accordance with one aspect of the invention, the honeycomb structure 2 with hexagonal honeycombs 3 made of ferromagnetic material is sized taking into account the saturation level of the material itself.

In particular, the longer sides 3a, 4a of the honeycombs 3 and of the conducting elements 4 (i.e. the sides parallel to the air gap) may constitute, if not adequately designed, short-circuit paths of the magnetic flow. Therefore, such sides 3a, 4a can increase the dispersed flow.

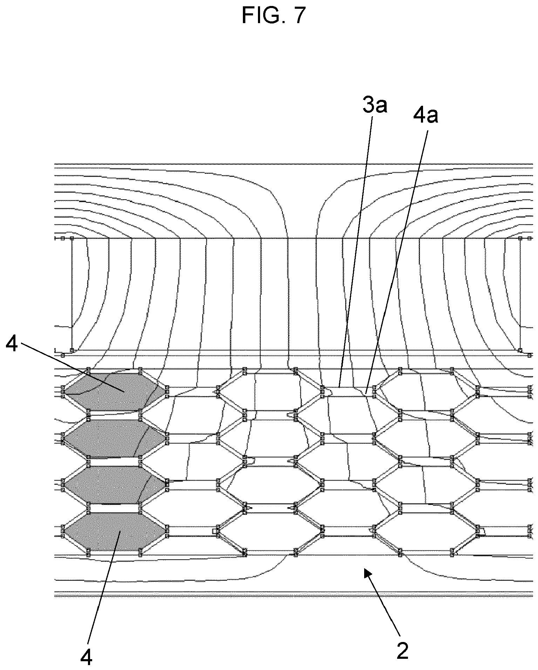

Preferably, the longer sides 3a, 4a of honeycombs 3 and conducting elements 4 (in particular they are the horizontal sections indicated in figure 7) are sized in such a way that their thickness is such as to saturate the ferromagnetic material.

In this context, the ferromagnetic material is saturated when working in an area of the characteristic curve B-H in which the magnetic permeability is close to that of vacuum (usually indicated with muo). The corresponding value of the flow density must therefore be at least 2 Tesla.

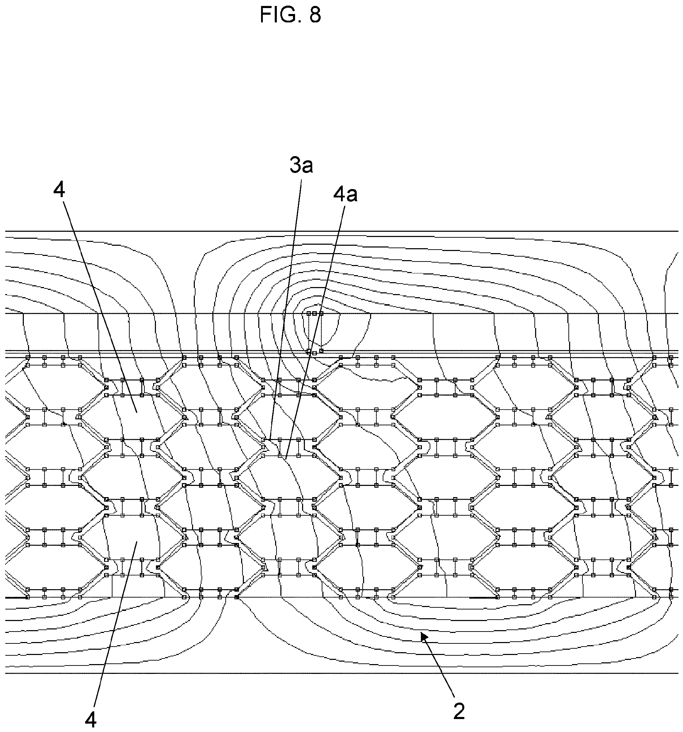

As an alternative to the sizing of the long sides indicated above, the honeycomb structure 3 is interrupted at the long sides 3a, 4a. This solution is schematically illustrated in figure 8.

In this case, the void space created by the interruption of the honeycomb structure 3 may be left as such or impregnated with a resin or other insulating material. In accordance with another embodiment, illustrated in figure 6, each honeycomb 3 has a rectangular cross-section and each conducting element 4 has a rectangular cross-section that is counter-shaped to that of the corresponding honeycomb 3 into which it is inserted. In this way, each conducting element 4 is housed in the corresponding honeycomb 3 occupying substantially the entire volume of the honeycomb cavity (net of insertion tolerances).

With reference to the figures, the numeral 10 indicates an electric motor comprising the primary component 1 described above.

The electric motor 10 may be of the rotary or linear type.

In accordance with an embodiment, illustrated in figure 4, the electric motor 10 is of rotary type, i.e. it comprises a stator 11 and a rotor 12 rotatably inserted in the stator 11.

The stator 11 is realized as the primary component 1 described above. Alternatively, the rotor 12 is made as the primary component 1 described above.

In accordance with another embodiment, illustrated in figure 5 or 6, the electric motor 10 is of linear type, i.e. it comprises a stator 11 and a slider 13 that is slidably coupled to the stator 11.

The stator 11 is realized as the primary component 1 described above. Alternatively, the slider 13 is realized as the primary component 1 described above.

In accordance with one aspect of the invention, the primary component 1 comprises several superimposed honeycomb structures 2, each of which is made as described above.

In this way, it is possible to realize a primary component 1 corresponding to a three-phase multi-layer winding structure, or a multi-phase winding. According to a preferred aspect of the invention, the electric motor 10 is a permanent magnet brushless motor.

From the description provided, the features of the primary component for electric machines and of the electric motor comprising said primary component, according to the present invention, are clear, as are the advantages.

In particular, the primary component proposed herein achieves higher performances than the known solutions in terms of increase in electrical load, better thermal dissipation and improvement of the waveform of the electromotive force that is closer to the theoretical sinusoid. This is thanks to the fact that each conducting element occupies substantially the entire volume of the honeycomb in which it is housed (net of insertion tolerances). The portions of the honeycomb structure that define the honeycombs become the site of circulation of the magnetic flow.

In fact, the honeycomb structure with conducting elements allows to overcome the classic configuration of windings in the slots that face the air gap, which left a high percentage of volume unused and giving rise to the stepped waveform for the electromotive force.

In addition, the correct sizing of the long sides of the hexagons in the honeycomb structure, or their interruption allows to reduce the dispersed flows, avoiding losing power delivered.

## Claims

1. A primary component (1) for electric machines, comprising:
a honeycomb structure (2) comprising a plurality of honeycombs or niches (3);
a plurality of conducting elements (4), each of which is housed in one of the honeycombs (3) of the honeycomb structure (2).

2. The primary component (1) according to claim 1, wherein each of said conducting elements (4) is counter-shaped relative to the corresponding honeycomb (3) into which it is inserted.

3. The primary component (1) according to claim 2, wherein each of said honeycombs (3) is a through cavity of prismatic shape and each of said conducting elements (4) is a prismatic body that is counter-shaped to the prismatic shape of the corresponding honeycomb (3) into which it is inserted.

4. The primary component (1) according to claim 3, wherein each of said honeycombs (3) has a hexagonal cross section and each of said conducting elements (4) has a hexagonal cross section that is counter-shaped relative to the cross section of the corresponding honeycomb (3) into which it is inserted.

5. The primary component (1) according to claim 3, wherein each of said honeycombs (3) has a rectangular cross section and each of said conducting elements (4) has a rectangular cross section that is counter-shaped relative to the cross section of the corresponding honeycomb (3) into which it is inserted.

6. The primary component (1) according to any one of the preceding claims, wherein said honeycomb structure (2) is made of ferromagnetic material.

7. The primary component (1) according to any one of the preceding claims, wherein said honeycomb structure (2) is a single solid body, i.e. devoid of joints.

8. The primary component (1) according to claim 6, wherein said honeycomb structure (2) has a thickness that is sized so as to saturate the ferromagnetic material.

9. The primary component (1) according to claim 6, wherein the honeycomb structure (2) has interruptions at sides (3a) of the honeycombs (3).

10. An electric motor (10) comprising a primary component (1) according to any one of the preceding claims.

11. The electric motor (10) according to claim 10, comprising a stator (11) and a rotor (12) rotatably inserted into said stator (11), said primary component (1) constituting the stator (11).

12. The electric motor (10) according to claim 10, comprising a stator (11) and a rotor (12) rotatably inserted into said stator (11), said primary component (1) constituting the rotor (12).

13. The electric motor (10) according to claim 10, comprising a stator (11) and a slider (13) that is slidable relative to said stator (11), said primary component (1) constituting the stator (11).

14. The electric motor (10) according to claim 10, comprising a stator (11) and a slider (13) that is slidable relative to said stator (11), said primary component (1) constituting the slider (13).
